# EUROPEAN PATENT APPLICATION

(11) **EP 4 693 075 A1**
(43) Date of publication of application: **11.02.2026**
(21) Application number: 24778286.5
(22) Date of filing: 29.03.2024
(51) Int. Cl.: G06F 16/957, G06F 16/9535, G06Q 30/0601

(54) **INTERACTION METHOD AND APPARATUS, ELECTRONIC DEVICE, AND STORAGE MEDIUM**

(30) Priority: 30.03.2023 CN 202310333445
(71) Applicant: BEIJING YOUZHUJU NETWORK TECHNOLOGY CO. LTD., Beijing 101299 (CN)
(72) Inventor: YANG, Jie, Beijing 100028 (CN); ZHAO, Chuan, Beijing 100028 (CN); HE, Xiaofeng, Beijing 100028 (CN)
(74) Representative: Grünecker Patent- und Rechtsanwälte PartG mbB
(86) International application number: PCT/CN2024/085078
(87) International publication number: WO 2024/199501

(57) **Abstract**

The disclosure relates to a method and device, electronic equipment and a storage medium for interaction, and the method comprises: presenting a target object presentation page; and in response to an instruction of returning an object preview page, presenting the object preview page, the object preview page and the target object presentation page corresponding to a same object, the object preview page comprising search keyword information, and the search keyword information being information determined based on object association information of the target object presentation page. In essence, after returning to the object preview page, the search keyword information is presented in the object preview page, thereby providing a way for the user to conveniently and quickly perform information query.

## Description

The present disclosure claims the benefit of Chinese Patent Application No. 2023103334450, entitled 'METHOD, APPARATUS, ELECTRONIC DEVICE, AND STORAGE MEDIUM FOR INTERACTION,' filed on March 30, 2023, the entire content of which is incorporated herein by reference.

### FIELD

The present disclosure relates to the field of computer technologies, and in particular, to a method, apparatus, electronic device, and storage medium for interaction.

### BACKGROUND

With the development of applications and computer technologies, more and more users browse various information through application programs. The application programs present preview information to the user through the preview page, and attracts the user to select information of interest to continue browsing.

However, in practice, the amount of information that the preview page may be presented to the user is limited, which is not conducive to improving the willingness of the user to continue browsing.

### SUMMARY

The present disclosure provides a method, apparatus, device, electronic device, and storage medium for interaction.

According to a first aspect, the present disclosure provides a method of interaction, including:
presenting a target object presentation page; and
in response to an instruction of returning an object preview page, presenting the object preview page, the object preview page and the target object presentation page corresponding to a same object, the object preview page including search keyword information, and the search keyword information being information determined based on object association information of the target object presentation page.

According to a second aspect, the present disclosure further provides an apparatus for interaction, including:
a target object presentation page presenting module configured to present a target object presentation page; and
a preview page presenting module configured to, in response to an instruction of returning an object preview page, present the object preview page, the object preview page and the target object presentation page corresponding to a same object, the object preview page including search keyword information, and the search keyword information being information determined based on object association information of the target object presentation page.

In a third aspect, the present disclosure further provides an electronic device, including:
one or more processors;
a storage device configured to store one or more programs; and
the one or more programs, when executed by the one or more processors, causing the one or more processors to implement the method of interaction as described above.

In a fourth aspect, the present disclosure further provides a computer-readable storage medium having a computer program stored thereon, the program, when executed by a processor, implements the method of interaction as described above.

### BRIEF DESCRIPTION OF DRAWINGS

The drawings herein are incorporated in and constitute a part of this specification, illustrating embodiments consistent with the present disclosure and, together with the description, serve to explain the principles of the present disclosure.

In order to more clearly illustrate the technical solutions in the embodiments in the present disclosure or in the prior art, the accompanying drawings used in the description of the embodiments, or the prior art will be briefly introduced below, and it is obvious to those skilled in the art that other drawings may be obtained according to these drawings without creative labor.
FIG. 1 is a flowchart of a method of interaction according to an embodiment in the present disclosure;
FIGS. 2-4 are schematic diagrams of three object preview pages according to an embodiment in the present disclosure;
FIG. 5 is a flowchart of a further method of interaction according to an embodiment in the present disclosure;
FIG. 6 is a schematic diagram of a search result page according to an embodiment in the present disclosure;
FIG. 7 is a flowchart of a further method of interaction according to an embodiment in the present disclosure;
FIG. 8 is a schematic structural diagram of an apparatus for interaction according to an embodiment in the present disclosure;
FIG. 9 is a schematic structural diagram of an electronic device according to an embodiment in the present disclosure.

### DETAILED DESCRIPTION

In order to be able to more clearly understand the above objects, features and advantages of the present disclosure, the solutions of the present disclosure will be further described below. It would be appreciated that, in the case of no conflict, the features in the embodiments and embodiments in the present disclosure may be combined with each other.

Many specific details are set forth in the following description to facilitate a thorough understanding of the present disclosure, but the present disclosure may also be implemented in other ways other than those described herein; it is apparent that the embodiments in the specification are only part of the embodiments in the present disclosure, not all embodiments.

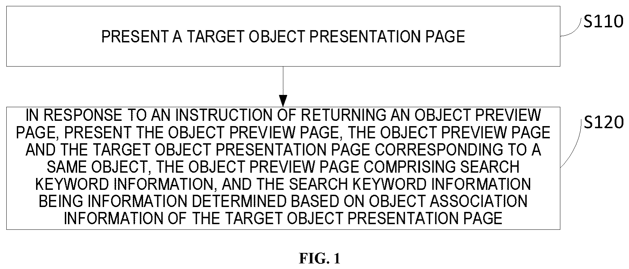

FIG. 1 is a flowchart of a method of interaction according to an embodiment in the present disclosure. This embodiment may be adapted to the case wherein a user interacts with a client. The method may be performed by an interaction apparatus, and the apparatus may be implemented in software and/or hardware. The apparatus may be configured in an electronic device, for example, a terminal, including but not limited to a smart phone, a handheld computer, a tablet computer, a wearable device with a display screen, a desktop computer, a notebook computer, an all-in-one machine, a smart home device, and the like.

As shown in FIG. 1, the method may specifically include:
S1: a target object presentation page is presented.

The object may be, for example, a live streaming room.

The target object presentation page may be, for example, a page corresponding to the target object and configured to describe the shared content. In an embodiment, the object presentation page is a live streaming presentation page. The live streaming presentation page may be, for example, a live streaming room public screen presented after entering the live streaming room. In the live streaming presentation page, an anchor introduces shared contents to the audience in a live streaming manner. The shared content may be a commodity. Further, the shared content may include an item or a service.

S2: in response to an instruction of returning an object preview page, the object preview page is presented, the object preview page and the target object presentation page corresponding to a same object, the object preview page including search keyword information, and the search keyword information being information determined based on object association information of the target object presentation page.

The object preview page may be an information stream page for drainage in an application, and in some embodiments, the object preview page may be understood as a video page for drainage.

In an implementation, the object preview page may be understood as a video page for draining a live streaming room, for example, may be a video page of a short video (the video content of the short video may be different from the video content of the live streaming room), or may be a live streaming room preview page corresponding to the live streaming room.

Optionally, the object preview page includes an option, control, or area that has a function of entering the target object presentation page, and when it is detected that the user performs a trigger operation on the option, control, or area that has the function of entering the target object presentation page, the target object presentation page is presented.

The instruction for returning the object preview page may be, for example, an instruction generated by the terminal after detecting that a user performs a trigger operation on an option, control, or area having a function of returning the object preview page. For example, an option, control or area having a function of returning the object preview page may be clicked.

The object preview page and the target object presentation page correspond to the same object, for example, it may be that both the object preview page and the target object presentation page correspond to the same live streaming room. For example, if the target object presentation page is a live streaming presentation page of a live streaming room A, the object preview page is a live streaming room preview page of the live streaming room A.

The keyword refers to content reflecting a core idea of searching. The search keyword information is information describing the keyword. The search keyword information may be presented in a form of text and/or an image, which is not limited in the present disclosure. For example, the search keyword information includes a keyword and an image corresponding to the keyword; or the search keyword information includes only a keyword.

The object association information may be, for example, information associated with a live streaming room corresponding to the target object presentation page. For example, the object association information includes at least one of the following: a shared content, a shared body, and page operation information of a user on the target object presentation page. The shared body may be, for example, an anchor. The shared content may be, for example, a commodity sold through a live streaming room. For example, the page operation information of a user on the target object presentation page may be, for example, an operation that the user views the shared object, an operation that the user interacts with the anchor, an operation that the user purchases the shared object, an operation that the user focuses on the live streaming room, and the like.

The search keyword information is information determined based on the object association information of the target object presentation page, which means that the keyword is not input or edited by the user, but is automatically generated based on the viewing condition (represented by the object association information) of the user on the target object presentation page.

If the object association information includes the shared content, the shared content is a commodity, and the keyword may be determined based on one or more commodities corresponding to the target object presentation page. For example, the search keyword information is determined based on a commodity explained by the anchor in a process of viewing the target object presentation page by the user; or the search keyword information is determined based on a commodity with a relatively high popularity (such as a commodity with a high number of followers, collections, purchases, comments, shares, views, consultations or likes) sold in the live streaming room.

For example, in the process of presenting the target object presentation page, the anchor explains a lipstick of a certain brand XX color to the user (XX represents a color), and the search keyword may be determined as 'XX lipstick'.

For example, in the process of presenting the target object presentation page, the anchor is an influencer good at dressing, which presents the matching effect of the clothes A and the clothes B to the user. In the process of viewing the live streaming by the user, the live streaming room is collected, and the search keyword may be determined as 'influencer good at dressing'.

**It** would be appreciated that, in an actual scenario, the search keyword information may include one or more keywords.

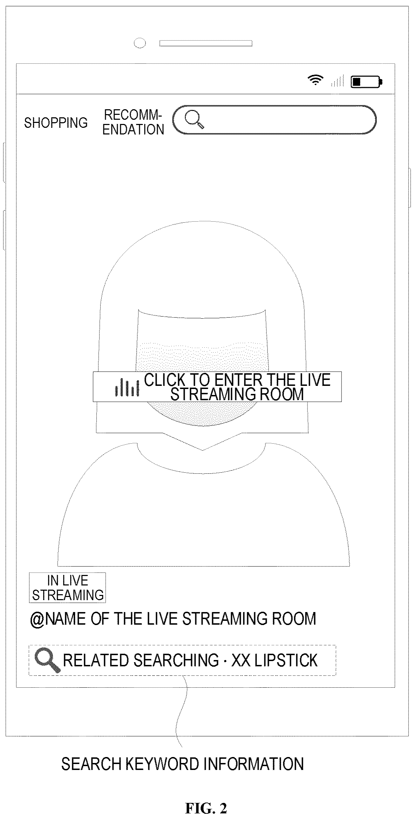

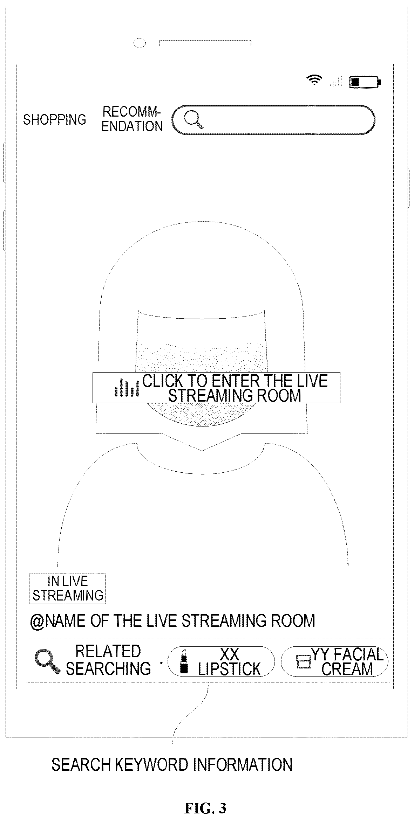

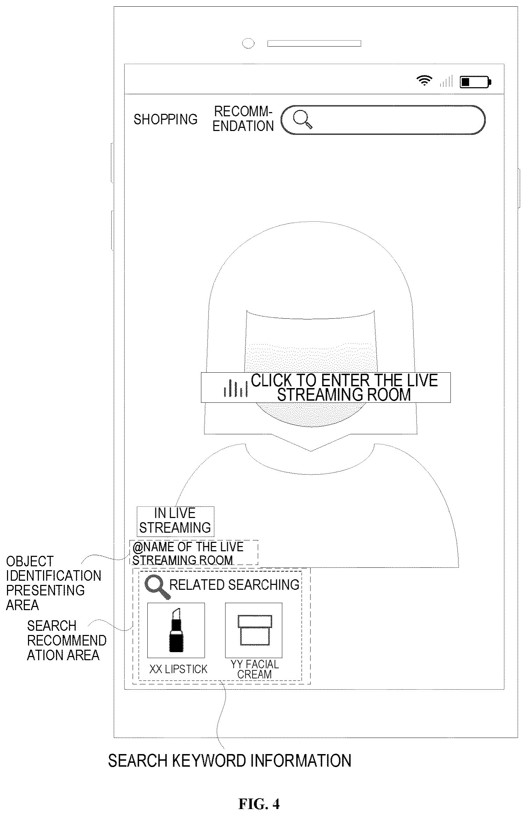

FIGS. 2-4 are schematic diagrams of three object preview pages according to an embodiment in the present disclosure. In FIGS. 2-4, the object preview pages are all live streaming room preview pages, and search keyword information is presented in the live streaming room preview page. In FIG. 2, the search keyword information only includes one search keyword, 'XX lipstick', and the search keyword information does not include an image corresponding to the keyword. In FIGS. 3 and 4, the search keyword information includes two search keywords, 'XX lipstick' and 'YY facial cream', respectively, and the search keyword information further includes an image corresponding to each keyword.

According to the technical scheme, a target object presentation page is presented; in response to an instruction of returning an object preview page, the object preview page is presented, the object preview page and the target object presentation page corresponding to a same object, the object preview page including search keyword information, and the search keyword information being information determined based on object association information of the target object presentation page. Its essence is to provide a convenient and quick way for users to query information by presenting the search keyword information in the object preview page after returning to the object preview page.

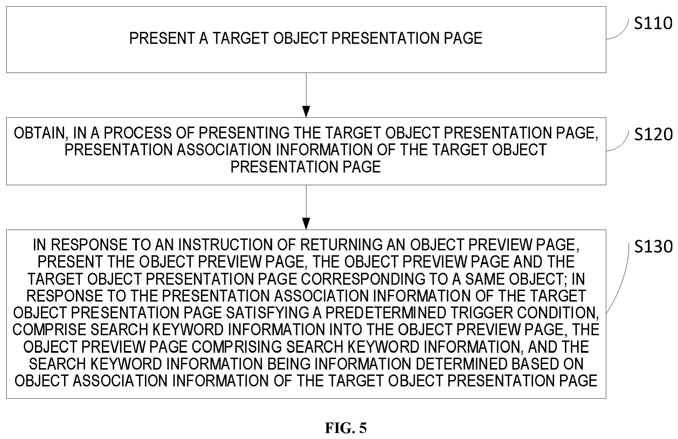

FIG. 5 is a flowchart of a further method of interaction according to an embodiment in the present disclosure. FIG. 5 is a specific example of FIG. 1. Referring to FIG. 5, the method includes:
S110: a target object presentation page is presented.
S120: obtain, in a process of presenting the target object presentation page, presentation association information of the target object presentation page .

The presentation association information may be, for example, information capable of reflecting a control operation condition of the user on the target object presentation page in a process of viewing the target object presentation page by the user. Content included in the presentation association information is not limited in the present disclosure.

For example, the presentation association information includes a presentation duration of the target object presentation page and/or operation information of the user on the target object presentation page. The content included in the operation information of the user on the target object presentation page is not limited in the present disclosure. Optionally, the operation information of the user on the target object presentation page includes an operation of the user viewing the shared object, an operation of the user interacting with the anchor, an operation of purchasing the shared object by the user, an operation of the user following the live streaming room, and the like.

S130: in response to an instruction of returning an object preview page, present the object preview page, the object preview page and the target object presentation page corresponding to a same object; in response to the presentation association information of the target object presentation page satisfying a predetermined trigger condition, include search keyword information into the object preview page, the object preview page including search keyword information, and the search keyword information being information determined based on object association information of the target object presentation page.

The predetermined trigger condition may be, for example, a condition for measuring whether to present the search keyword information in the object preview page. If the presentation association information of the target object presentation page satisfies the predetermined trigger condition, it is determined that the search keyword information needs to be presented on the object preview page. If the presentation association information of the target object presentation page does not satisfy the predetermined trigger condition, it is determined that the search keyword information does not need to be presented on the object preview page.

The content included in the predetermined trigger condition is not limited in the present disclosure. For example, if the presentation association information includes a presentation duration of the target object presentation page, the predetermined trigger condition includes a presentation duration of the target object presentation page reaching a set duration threshold; and/or, if the presentation association information includes operation information of a user on the target object presentation page, the predetermined trigger condition includes an operation of the user on the target object presentation page being a predetermined operation. Therein, the predetermined operation may be a pre-specified operation, for example, an operation that the user interacts with the anchor or an operation that the user purchases the shared object.

According to the technical scheme obtains, in a process of presenting the target object presentation page, presentation association information of the target object presentation page. In response to the instruction of returning the object preview page, the technical scheme presents the object preview page, and in response to the presentation association information of the target object presentation page satisfying a predetermined trigger condition, including search keyword information into the object preview page. In essence, whether the presentation association information of the target object presentation page satisfies the predetermined trigger condition is judged to consider whether to present the search keyword information, so that diversified use requirements of the user are satisfied, and the user viewing experience is improved.

Based on the foregoing technical solution, optionally, the method further includes: in response to a trigger operation on the search keyword information, presenting a search result page including search result information, the search result information being associated with the search keyword information.

The trigger operation on the search keyword information may be, for example, a click operation or a slide operation on the search keyword information.

The search result page may be, for example, a page for presenting results related to the search keyword.

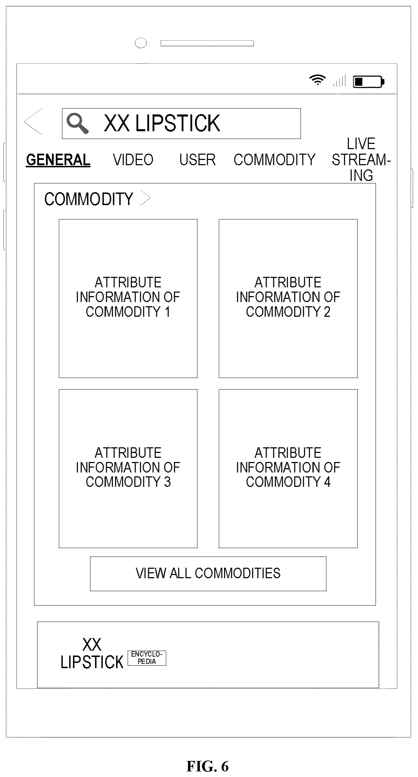

FIG. 6 is a schematic diagram of a search result page according to an embodiment in the present disclosure. Referring to FIG. 6, the search keyword information presented in the object preview page includes a search keyword 'XX lipstick'. When the user clicks on the keyword information, as shown in FIG. 6, a search result page is presented, a plurality of search results are included in the search result page, and each search result is a search result obtained by using 'XX lipstick' as a search condition.

The search result page is presented by setting the trigger operation in response to the search keyword information, so that the search keyword information has a jump function, and the user may further deeply research the related content of the keyword.

Based on the foregoing technical solution, optionally, the method of interaction further includes: determining, in a process of presenting the target object presentation page, search keyword information periodically at a predetermined time interval. S130 may include: in response to the instruction of returning the object preview page, and in response to the presentation association information of the target object presentation page satisfying the predetermined trigger condition, determining search keyword information to be presented as last search keyword information that is determined up to a current moment; and presenting the object preview page including the search keyword information to be presented.

The predetermined time interval may be, for example, a time interval between two adjacent times of determining the search keyword information. A specific value of the predetermined time interval is not limited in the present disclosure. For example, the predetermined time interval is 10s, that is, the keyword information is determined once every 10s.

In some actual scenarios, optionally, a plurality of predetermined time intervals are set, and each predetermined time interval is set to correspond to a maximum quantity threshold. In the process of presenting the target object presentation page, the search keyword information is determined based on each predetermined time interval and a maximum number threshold corresponding to each predetermined time interval. For example, three time intervals are preset, which are respectively 10s, 1min and 30 min. The maximum number threshold corresponding to 10s is 1, the maximum number threshold corresponding to 1min is 10, and the maximum number threshold corresponding to 30 min is ∞. That is, in the process of presenting the target object presentation page, the moment for determining the search keyword information is 10s, 1min10s, 2min10s, 3min10s, 4min10s, 5min10s, 6min10s, 7 min10s, 8 mins, 9 mins, 10 mins, 40 mins, 1 h10 mins,.

The search keyword information that is determined up to a current moment is the search keyword information closest to the current moment in all the determined search keyword information at the current moment. The current moment refers to a moment at which an instruction for returning an object preview page is received. For example, assuming that the moment at which the instruction for returning the object preview page is received is the moment at which the target object presentation page 3min has been presented, and in the process of presenting the target object presentation page, the keyword information is respectively determined at 10s, 1min10s, and 2min10s. Then, the moment when the search keyword information is last determined at the current moment is 2min10s, and the search keyword information determined in 2min10s is determined as the search keyword information to be presented.

Determining search keyword information to be presented as last search keyword information that is determined up to a current moment and presenting the object preview page including the search keyword information to be presented aims to ensure that the presented search keyword is the latest determined search keyword.

Based on the foregoing technical solutions, optionally, before S110, the method further includes: presenting an object preview page; wherein presenting the target object presentation page includes: in response to an instruction to enter the target object presentation page, presenting the target object presentation page.

The instruction for entering the target object presentation page may be, for example, an instruction generated by the terminal after detecting an option, a control, or an area in the object preview page that has a function of entering the target object presentation page. The trigger operation performed on the option, the control, or the area having the function of entering the target object presentation page may be, for example, clicking or sliding an option, a control, or an area having a function of entering the target object presentation page.

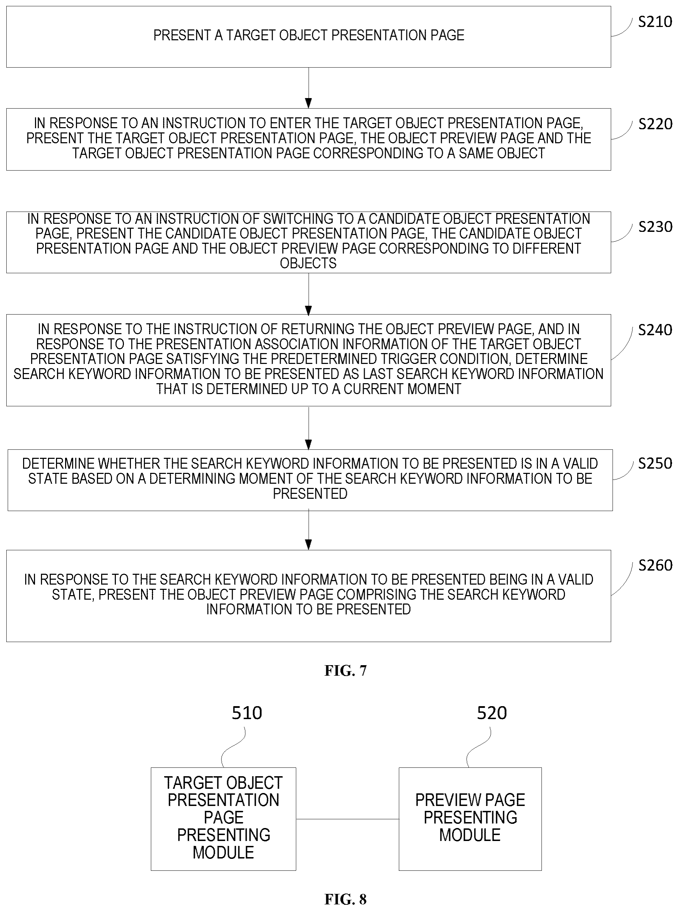

FIG. 7 is a flowchart of a further method of interaction according to an embodiment in the present disclosure. FIG. 7 is a specific example of FIG. 1. Referring to FIG. 7, the method of interaction includes:
S210: present the object preview page.
S220: in response to an instruction to enter the target object presentation page, present the target object presentation page, the object preview page and the target object presentation page corresponding to a same object.

By way of example, the object preview page includes a control or area having a function of entering the target object presentation page. After the user clicks the control or area having the function of entering the target object presentation page, the terminal generates an instruction for entering the target object presentation page, and in response to the instruction for entering the target object presentation page, presents the target object presentation page.

S230: in response to an instruction of switching to a candidate object presentation page, present the candidate object presentation page, the candidate object presentation page and the object preview page corresponding to different objects.

The candidate object presentation page may be, for example, an object presentation page of different live streaming rooms corresponding to the object preview page. For example, the object preview page is the live streaming room preview page of the live streaming room A, and the candidate object presentation page is a live streaming presentation page of a live streaming room B.

In some applications, information is typically presented to the user in a manner that streams the sequence. An information stream playing sequence is a data form for continuously providing content to a user. The information stream playing sequence includes a set of contents/pieces of information. The set of information/contents includes a plurality of contents/pieces of information, and the plurality of contents/pieces of information are sequentially arranged in a certain order to form an information stream playing sequence. The information stream refers to each content/ piece of information in the information stream playing sequence. An information stream playing sequence is a collection formed from a plurality of information streams. For example, if the information stream playing sequence is a set of videos, wherein each of the videos is an information stream.

The types of different information streams in the same information stream playing sequence may be the same or different. Types of information streams may include, but are not limited to, live streaming preview videos, short videos, and graphic and text information. Wherein, the live streaming preview video may be, for example, a video for drain a live streaming room. The short video may be, for example, a short video. For example, the graphic and textual information may recommend graphic and textual information of some content to the user, and the graphic and textual information may be, for example, a recommendation application program, a page mini-game, or the like.

The object preview page mentioned in S210 in the present disclosure may be determined as an information stream.

The essence of S220 is to enter an internal stream page corresponding to the object preview page by performing an option on a control or an area in the object preview page. Optionally, the inner stream page includes N pages, and N is a positive integer greater than or equal to 2. In the N pages, the first page is a target object presentation page, and the first to Nth are candidate object presentation pages.

When the terminal presents the object preview page, in response to detecting that the user performs the trigger operation on the option, the control, or the area having the function of entering the inner stream page, a first inner stream page (that is, the target object presentation page) is presented.

When the terminal presents an inner stream page (whether a page is a target object), the terminal may directly return the object preview page from any of the inner stream pages.

Optionally, in the inner stream page corresponding to the object preview page, each inner stream page has an option, a control, or an area having a function of returning the object preview page. The user may return the object preview page by triggering an option, a control or an area having a function of returning the object preview page in any of the inner stream pages.

For example, if an object preview page is the live streaming room preview page of the live streaming room A, the inner stream page corresponding to the live streaming room preview page includes 4 pages, wherein the first page is a live streaming presentation page of the live streaming room A, and the second to fourth pages are live streaming presentation pages of the live streaming room B, live streaming presentation pages of a live streaming room C, and live streaming presentation pages of a live streaming room D. Each inner stream page includes an option, control, or area having a function of returning the object preview page. When the terminal presents the inner stream page, regardless of which of the first to fourth pages is presented, when the user triggers an option, a control or an area having a function of returning the object preview page, the terminal will generate an instruction for returning the object preview page, and then in response to the instruction of returning the object preview page, present the object preview page (that is, the live streaming room preview page of the live streaming room a).

In S220, in response to an instruction to enter the target object presentation page, the first internal stream page is presented. The essence of this step is to switch the inner stream page, so that the terminal presents a candidate inner stream page.

S240, in response to the instruction of returning the object preview page, and in response to the presentation association information of the target object presentation page satisfying the predetermined trigger condition, determine search keyword information to be presented as last search keyword information that is determined up to a current moment.

It would be appreciated that, for the moment at which the instruction for returning the object preview page is generated, which inner stream page is presented on the terminal is not limited in the present disclosure. In other words, before S240, the terminal presents may present either the target object presentation page or the candidate object presentation page.

S250, determine whether the search keyword information to be presented is in a valid state based on a determining moment of the search keyword information to be presented.

The failure condition may be, for example, a condition for determining whether the search keyword information is to be presented in the object preview page. The specific content of the failure condition is not limited in the present disclosure. For example, the failure condition may be set to include a time interval between a determining moment of the search keyword information to be presented and a moment at which the instruction for returning the object preview page is received is greater than or equal to 30 min.

If the determining moment of the search keyword information to be presented satisfies the failure condition, the search keyword information to be presented is in a failure state, and the search keyword information to be presented is not presented subsequently in the object preview page.

If the determining moment of the search keyword information to be presented does not satisfy the failure condition, the search keyword information to be presented is in a valid state, and the search keyword information to be presented is presented subsequently in the object preview page.

In an actual scenario, if the search keyword information to be presented includes a keyword and an image corresponding to the keyword, determining the search keyword information includes at least the following two cases.

Case 1: In the process of presenting the target object presentation page, when the search keyword information is periodically determined, the keyword and the image corresponding to the keyword may be synchronously determined. In this case, the determining moment of the keyword in the same search keyword information and the determining moment of the image are the same moment.

Case 2: In the process of presenting the target object presentation page, when the search keyword information is periodically determined, only the keyword is determined, and the image is not determined. After the search keyword information is determined as the search keyword information to be presented, the image is determined. In this case, the determining moment of the keyword and the determining moment of the image in the same search keyword information are different moments.

For each of the foregoing cases, optionally, when determining whether the search keyword information to be presented is in the valid state, the determining moment at which the used search keyword information to be presented is the determining moment at which the keyword is to be presented in the search keyword information to be presented.

S260: in response to the search keyword information to be presented being in a valid state, present the object preview page including the search keyword information to be presented.

For ease of understanding, the following describes a specific example. It is assumed that the predetermined trigger condition includes that the presentation duration of the target object presentation page reaches 10s (the duration threshold), that is, when the presentation duration of the target object presentation page reaches 10s, it is considered whether the search keyword information is presented in the object preview page. In addition, in the process of presenting the target object presentation page, the moment for determining the search keyword information is 10s, 1min10s, 2min10s, 3min10s, 4min10s, 5min10s, 6min10s, 7 min10s, 8 mins, 9 mins, 10 mins, 40 mins, 1 h10 mins,. The failure condition includes |t2-t1|≥30min, wherein t1 is the determining moment of the search keyword information to be presented, and t2 is the moment of receiving the instruction of returning the object preview page.

### Example 1:

The user control the terminal first presents the live streaming room preview page of the live streaming room A, then triggers the terminal to generate an instruction for entering the live streaming presentation page of the live streaming room A. The terminal, in response to the instruction of entering the live streaming presentation page of the live streaming room A, presents the live streaming presentation page of the live streaming room A. After viewing the live streaming presentation page 10 min of the live streaming room A, the user triggers the terminal to generate an instruction of switching to a candidate object presentation page, and the terminal, in response to the instruction of switching to the candidate object presentation page, presents the live streaming presentation page of the live streaming room B. After viewing the live streaming presentation page 40 min of the live streaming room B, the user triggers the terminal to generate an instruction for returning the live streaming room preview page of the live streaming room A.

Since the stay duration (10 min) of the live streaming presentation page of the live streaming room A is greater than the duration threshold, it is considered that the search keyword information is presented on the object preview page. Because the search keyword information is periodically determined in the process of presenting the live streaming presentation page of the live streaming room A, it is determined that the moment at which the last search keyword information that is determined up to a current moment is 9min10s. Because the duration (about 40 min50s) between the determining moment of the search keyword information to be presented and the moment at which the instruction to generate the live streaming room preview page of the returning live streaming room A is greater than 30 min, the search keyword information to be presented is in the invalid state. The terminal, in response to the instruction of returning the live streaming room preview page of the live streaming room A, presents the live streaming room preview page of the live streaming room A. In the live streaming room preview page of the live streaming room A, the search keyword information to be presented is not included.

### Example Two:

**The** user control the terminal first presents the live streaming room preview page of the live streaming room A, then triggers the terminal to generate an instruction for entering the live streaming presentation page of the live streaming room A. The terminal, in response to the instruction of entering the live streaming presentation page of the live streaming room A, presents the live streaming presentation page of the live streaming room A. After viewing the live streaming presentation page 1min of the live streaming room A, the user triggers the terminal to generate an instruction of switching to the candidate object presentation page, and the terminal, in response to the instruction of switching to the candidate object presentation page, presents the live streaming presentation page of the live streaming room B. After viewing the live streaming presentation page 40 min of the live streaming room B, the user triggers the terminal to generate an instruction for returning the live streaming presentation page of the live streaming room A. The terminal, in response to the instruction of returning the live streaming presentation page of the live streaming room A, presents the live streaming presentation page of the live streaming room A, and after viewing the live streaming presentation page 6min of the live streaming room A, the user triggers the terminal to generate an instruction to return the live streaming room preview page of the live streaming room A.

Since the longest stay duration of the two times in the live streaming presentation page of the live streaming room A is greater than the duration threshold, it is considered that the search keyword information is presented on the object preview page. In the process of presenting the live streaming presentation page of the live streaming room A twice, the search keyword information is periodically determine. Therefore, it is determined that the determining moment of the search keyword information to be presented is 5min10s of the live streaming presentation page for the second presentation of the live streaming room A. Because the duration (about 50s) between the determining moment of the search keyword information to be presented and the moment at which the instruction for generating the live streaming room preview page of returning the live streaming room A is generated is less than 30 min, and the search keyword information to be presented is in the valid condition, the terminal, in response to the instruction of returning the live streaming room preview page of the live streaming room A, presents the live streaming room preview page of the live streaming room A. The live streaming room preview page of the live streaming room A includes search keyword information to be presented.

### Example 3:

The user control the terminal first presents the live streaming room preview page of the live streaming room A, then triggers the terminal to generate an instruction for entering the live streaming presentation page of the live streaming room A. The terminal, in response to the instruction of entering the live streaming presentation page of the live streaming room A, presents the live streaming presentation page of the live streaming room A. After viewing the live streaming presentation page 10 min of the live streaming room A, the user triggers the terminal to generate an instruction of switching to the candidate object presentation page, and the terminal, in response to the instruction of switching to the candidate object presentation page, presents the live streaming presentation page of the live streaming room B. After viewing the live streaming presentation page 40 min of the live streaming room B, the user triggers the terminal to generate an instruction for returning the live streaming presentation page of the live streaming room A. The terminal, in response to the instruction of returning the live streaming presentation page of the live streaming room A, presents the live streaming presentation page of the live streaming room A. The user triggers the terminal to generate an instruction to return the live streaming room preview page of the live streaming room A after viewing the live streaming presentation page of the live streaming room A for 40 min.

Since the longest stay duration of the two times in the live streaming presentation page of the live streaming room A is greater than the duration threshold, it is considered that the search keyword information is presented on the object preview page. In the process of presenting the live streaming presentation page of the live streaming room A twice, the search keyword information is periodically determined. Therefore, it is determined that the determining moment of the search keyword information to be presented is 10 min10s of the live streaming presentation page of the live streaming room A for the second time. Because the period duration (about 29 min50s) between the determining moment of the search keyword information to be presented and the moment at which the instruction for generating the live streaming room preview page of returning live streaming room A is generated is less than 30 min, and the search keyword information to be presented is in the valid condition, the terminal, in response to the instruction of returning the live streaming room preview page of the live streaming room A, presents the live streaming room preview page of the live streaming room A. The live streaming room preview page of the live streaming room A includes search the keyword information to be presented.

### Example Four:

The user control the terminal first presents the live streaming room preview page of the live streaming room A, then triggers the terminal to generate an instruction for entering the live streaming presentation page of the live streaming room A. The terminal, in response to the instruction of entering the live streaming presentation page of the live streaming room A, presents the live streaming presentation page of the live streaming room A. After viewing the live streaming presentation page 3s of the live streaming room A, the user triggers the terminal to generate an instruction for returning the live streaming room preview page of the live streaming room A.

Since the stay duration (3s) of the live streaming presentation page of the live streaming room A is less than the duration threshold, it is not considered that the search keyword information is presented on the object preview page. The terminal, in response to an instruction of returning the live streaming room preview page of the live streaming room A, presents the live streaming room preview page of the live streaming room A. The search keyword information is not included in the live streaming room preview page of the live streaming room A.

The essence of the above technical solution is to intercept the search keyword information that is earlier in time by the failure condition, and may avoid presenting the search keyword information that is earlier in time in the object preview page.

Based on the foregoing technical solution, optionally, the object preview page includes a search recommendation area and an object identification presenting area, the search recommendation area being configured to present the search keyword information, the object identification presenting area being configured to present identification information of an object corresponding to the object preview page; wherein the search recommendation area is adjacent to the object identification presenting area; or the search recommendation area is located at a bottom of the object preview page.

Therein, the identification information of the object may be, for example, information capable of distinguishing an object from a further object. For example, if the object is a live streaming room, the identification information of the object may be, for example, a name of the live streaming room or a live streaming room ID.

Still referring to FIG. 4, the search recommendation area is adjacent to the object identification presenting area, and the search recommendation area is located at the bottom of the object preview page. The search keyword information is presented within the search recommendation area. The identification information of the object is a name of a live streaming room, and the name of the live streaming room is presented in the object identification presenting area.

Compared with the prior art, the technical solution provided by the embodiment in the present disclosure has the following advantages.

According to the technical scheme provided by the embodiment in the present disclosure, a target object presentation page is presented; and in response to an instruction of returning an object preview page, the object preview page is presented, the object preview page and the target object presentation page corresponding to a same object, the object preview page including search keyword information, and the search keyword information being information determined based on object association information of the target object presentation page. In essence, after returning the object preview page, the search keyword information is presented in the object preview page, which provides a convenient and quick way for users to query information.

Further, the object is a live streaming room, the object preview page is a live streaming room preview page, and the target object presentation page is a live streaming presentation page corresponding to the same live streaming room as the live streaming room preview page.

It would be appreciated that, for the foregoing method embodiments, for simplicity of description, they are all expressed as a series of action combinations. However, those skilled in the art would appreciate that the present disclosure is not limited by the described order of acts, as certain steps may be performed in other orders or simultaneously in accordance with the present disclosure. Secondly, those skilled in the art should also understand that the embodiments described in the specification are all preferred embodiments, and the actions and modules involved are not necessarily required by the present disclosure.

FIG. 8 is a schematic structural diagram of an apparatus for interaction according to an embodiment in the present disclosure. The apparatus for interaction provided in the embodiments in the present disclosure may be configured in a client. Referring to FIG. 8, the apparatus for interaction specifically includes:
a target object presentation page presenting module 510 configured to present a target object presentation page;
a preview page presenting module 520 configured to, in response to an instruction of returning an object preview page, present the object preview page, the object preview page and the target object presentation page corresponding to a same object, the object preview page including search keyword information, and the search keyword information being information determined based on object association information of the target object presentation page.

Further, the apparatus further includes a presentation relationship information obtaining module;
the presentation relationship information obtaining module configured to obtain, in a process of presenting the target object presentation page, presentation association information of the target object presentation page;

The preview page presenting module 520 is configured to:
in response to the instruction of returning the object preview page, present the object preview page, and in response to the presentation association information of the target object presentation page satisfying a predetermined trigger condition, include search keyword information into the object preview page.

Further, the apparatus further includes a search keyword information determining module;

The search keyword information determining module configured to determine, in a process of presenting the target object presentation page, search keyword information periodically at a predetermined time interval;

The preview page presenting module configured to:
in response to the instruction of returning the object preview page, and in response to the presentation association information of the target object presentation page satisfying the predetermined trigger condition, determine search keyword information to be presented as last search keyword information that is determined up to a current moment; and
present the object preview page including the search keyword information to be presented.

Further, in response to the presentation association information including a presentation duration of the target object presentation page, the predetermined trigger condition includes a presentation duration of the target object presentation page reaching a set duration threshold; and/or
in response to the presentation association information including operation information of a user on the target object presentation page, the predetermined trigger condition includes an operation of the user on the target object presentation page being a predetermined operation.

Further, the apparatus further includes a candidate object presentation page switching module;
the candidate object presentation page switching module configured to, in response to an instruction of switching to a candidate object presentation page, present the candidate object presentation page, the candidate object presentation page and the object preview page corresponding to different objects;
the preview page presenting module configured to:
determine whether the search keyword information to be presented is in a valid state based on a determining moment and a failure condition of the search keyword information to be presented; and
in response to the search keyword information to be presented being in a valid state, present the object preview page including the search keyword information to be presented.

Further, the apparatus further includes a searching module configured to:
in response to a trigger operation on the search keyword information, present a search result page including search result information, the search result information being associated with the search keyword information.

Further, the object preview page includes a search recommendation area and an object identification presenting area, the search recommendation area being configured to present the search keyword information, the object identification presenting area being configured to present identification information of an object corresponding to the object preview page;
and the search recommendation area is adjacent to the object identification presenting area; or the search recommendation area is located at a bottom of the object preview page.

Further, the search keyword information includes a keyword and an image corresponding to the keyword; or the search keyword information includes a keyword;
the object association information includes at least one of the following:
a shared content, a shared body, and page operation information of a user on the target object presentation page.

Further, the apparatus further includes a front presenting module configured to:
Presenting the object preview page before presenting the target object presentation page;
A target object presentation page presenting module configured to:
   in response to an instruction to enter the target object presentation page, present the target object presentation page.

Further, the object is a live streaming room, the object preview page is a live streaming room preview page, and the target object presentation page is a live streaming presentation page corresponding to the same live streaming room as the live streaming room preview page.

The apparatus for interaction provided in this embodiment in the present disclosure may perform the steps performed by the client in the method of interaction provided in the method embodiments in the present disclosure, and has an execution step and a beneficial effect, and details are not described herein again.

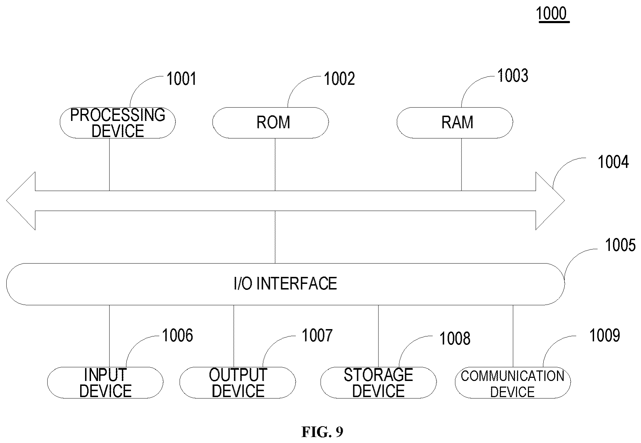

FIG. 9 is a schematic structural diagram of an electronic device according to an embodiment in the present disclosure. FIG. 9 is a schematic structural diagram of an electronic device 1000 suitable for implementing the embodiments in the present disclosure. The electronic device 1000 in the embodiments in the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), a wearable electronic device, and the like, and a fixed terminal such as a digital TV, a desktop computer, a smart home device, or the like. The electronic device shown in FIG. 9 is merely an example, and should not impose any limitation on the functions and scope of use of the embodiments in the present disclosure.

As shown in FIG. 9, the electronic device 1000 may include a processing device 1001 (for example, a central processing unit, a graphics processor, etc.), which may perform various appropriate actions and processing according to a program stored in a read-only memory (ROM) 1002 or a program loaded into a random access memory (RAM) 1003 from a storage device 1008 to implement the method of interaction according to the embodiments in the present disclosure. In the RAM 1003, various programs and information required by the operation of the electronic device 1000 are also stored. The processing device 1001, the ROM 1002, and the RAM 1003 are connected to each other through a bus 1004. An input/output (I/O) interface 1005 is also connected to the bus 1004.

Generally, the following devices may be connected to the I/O interface 1005: an input device 1006 including, for example, a touch screen, a touchpad, a keyboard, a mouse, a camera, a microphone, an accelerometer, a gyroscope, etc.; an output device 1007 including, for example, a liquid crystal display (LCD), a speaker, a vibrator, etc.; a storage device 1008 including, for example, a magnetic tape, a hard disk, etc.; and a communication device 1009. The communication device 1009 may allow the electronic device 1000 to communicate wirelessly or wired with other devices to exchange information. While FIG. 8 shows the electronic device 1000 having various devices, it would be appreciated that it is not required to implement or have all illustrated devices. More or fewer devices may alternatively be implemented or provided.

In particular, according to an embodiment in the present disclosure, the process described above with reference to the flowchart may be implemented as a computer software program. For example, the embodiments in the present disclosure include a computer program product including a computer program carried on a non-transitory computer readable medium, the computer program including program code for performing the method shown in the flowchart to implement the method of interaction as described above. In such embodiments, the computer program may be downloaded and installed from the network through the communication device 1009, or installed from the storage device 1008, or from the ROM 1002. When the computer program is executed by the processing device 1001, the foregoing functions defined in the method of the embodiments in the present disclosure are performed.

It would be appreciated that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include an information signal propagated in baseband or as part of a carrier, wherein the computer readable program code is carried. Such propagated information signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In some implementations, the client, server may communicate using any known or future developed network protocol, such as HTTP (HyperText Transfer Protocol), and may be interconnected with any form or medium of digital information communication (e.g., communication network). Examples of communication networks include local area networks ('LANs'), wide area networks ( 'WANs'), internets (e.g., the Internet), and peer-to-peer networks (e.g., ad hoc peer-to-peer networks), as well as any known or future developed networks.

The computer-readable medium described above may be included in the electronic device; or may be separately present without being assembled into the electronic device.

The computer-readable medium carries one or more programs, and when the one or more programs are executed by the electronic device, the electronic device is caused to:
present a target object presentation page;
in response to an instruction of returning an object preview page, present the object preview page, the object preview page and the target object presentation page corresponding to a same object, the object preview page including search keyword information, and the search keyword information being information determined based on object association information of the target object presentation page.

Optionally, when the one or more programs are executed by the electronic device, the electronic device may further perform other steps described in the foregoing embodiments.

Computer program code for performing the operations of the present disclosure may be written in one or more programming languages, including, but not limited to, object oriented programming languages such as Java, Smalltalk, C + +, and conventional procedural programming languages, such as the 'C' language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments in the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments in the present disclosure may be implemented in software, or may be implemented in hardware. The name of the unit does not constitute a limitation on the unit itself in some cases.

The functions described above may be performed, at least in part, by one or more hardware logic components. For example, without limitation, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments in the present disclosure, the present disclosure provides an electronic device, including:
one or more processors;
a storage device configured to store one or more programs; and
the one or more programs, when executed by the one or more processors, causing the one or more processors to implement the method of interaction according to any of the present disclosure.

According to one or more embodiments in the present disclosure, the present disclosure provides a computer-readable storage medium having a computer program stored thereon, the computer program, when executed by a processor, implementing the method interaction according to any of the present disclosure.

An embodiment in the present disclosure further provides a computer program product including a computer program or instructions, the computer program or the instruction, when executed by a processor, implementing the method of interaction as described above.

It would be appreciated that, in this specification, relational terms such as 'target' and 'second' are merely for distinguish one entity or operation from a further entity or operation, and do not necessarily require or imply that any such actual relationship or sequence exists between these entities or operations. Moreover, the terms 'including,' 'including,' or any other variation thereof are intended to cover a non-exclusive inclusion, such that a process, method, article, or apparatus including a series of elements includes not only those elements, but also other elements not expressly listed, or elements inherent to such a process, method, article, or apparatus. Without further restriction, the elements defined by the statement 'include one' do not preclude the presence of additional identical elements in the process, method, article, or device that includes the elements.

The above descriptions are only specific embodiments in the present disclosure, so that those skilled in the art may understand or implement the present disclosure. Various modifications to these embodiments will be apparent to those skilled in the art, the general principles defined herein may be implemented in other embodiments without departing from the spirit or scope of the present disclosure. Accordingly, the present disclosure will not be limited to these embodiments described herein, but is to be accorded the widest scope consistent with the principles and novel features disclosed herein.

## Claims

1. A method of interaction, **characterized by** comprising:
presenting a target object presentation page; and
in response to an instruction of returning an object preview page, presenting the object preview page, the object preview page and the target object presentation page corresponding to a same object, the object preview page comprising search keyword information, and the search keyword information being information determined based on object association information of the target object presentation page.

2. The method of claim 1, **characterized by** further comprising:
obtaining, in a process of presenting the target object presentation page, presentation association information of the target object presentation page; and
wherein in response to the instruction of returning the object preview page, presenting the object preview page, the object preview page comprising search keyword information comprises:
in response to the instruction of returning the object preview page, presenting the object preview page, and in response to the presentation association information of the target object presentation page satisfying a predetermined trigger condition, comprising search keyword information into the object preview page.

3. The method of claim 2, **characterized by** further comprising:
determining, in a process of presenting the target object presentation page, search keyword information periodically at a predetermined time interval;
wherein in response to the instruction of returning the object preview page, presenting the object preview page, and in response to the presentation association information of the target object presentation page satisfying the predetermined trigger condition, comprising search keyword information into the object preview page comprises:
in response to the instruction of returning the object preview page, and in response to the presentation association information of the target object presentation page satisfying the predetermined trigger condition, determining search keyword information to be presented as last search keyword information that is determined up to a current moment; and
presenting the object preview page comprising the search keyword information to be presented.

4. The method of claim 2, **characterized in that**,
in response to the presentation association information comprising a presentation duration of the target object presentation page, the predetermined trigger condition comprises a presentation duration of the target object presentation page reaching a set duration threshold; or
in response to the presentation association information comprising operation information of a user on the target object presentation page, the predetermined trigger condition comprises an operation of the user on the target object presentation page being a predetermined operation.

5. The method of claim 3, **characterized in that** after presenting the target object presentation page, the method further comprises:
in response to an instruction of switching to a candidate object presentation page, presenting the candidate object presentation page, the candidate object presentation page and the object preview page corresponding to different objects; and
wherein presenting the object preview page comprising the search keyword information to be presented comprises:
determining whether the search keyword information to be presented is in a valid state based on a determining moment and a failure condition of the search keyword information to be presented; and
in response to the search keyword information to be presented being in a valid state, presenting the object preview page comprising the search keyword information to be presented.

6. The method of claim 1, **characterized by** further comprising:
in response to a trigger operation on the search keyword information, presenting a search result page comprising search result information, the search result information being associated with the search keyword information.

7. The method of claim 1, **characterized in that** the object preview page comprises a search recommendation area and an object identification presenting area, the search recommendation area being configured to present the search keyword information, the object identification presenting area being configured to present identification information of an object corresponding to the object preview page; and
wherein the search recommendation area is adjacent to the object identification presenting area; or the search recommendation area is located at a bottom of the object preview page.

8. The method of claim 1, **characterized in that** the search keyword information comprises a keyword and an image corresponding to the keyword; or the search keyword information comprises a keyword;
wherein the object association information comprises at least one of the following: a shared content, a shared body, and page operation information of a user on the target object presentation page.

9. The method of claim 1, **characterized in that** before presenting the target object presentation page, the method further comprises:
presenting the object preview page; and
wherein presenting the target object presentation page comprises:
in response to an instruction to enter the target object presentation page, presenting the target object presentation page.

10. The method of claim 1, **characterized in that**,
the object is a live streaming room, the object preview page is a live streaming room preview page, and the target object presentation page is a live streaming presentation page corresponding to a same live streaming room as the live streaming room preview page.

11. An apparatus for interaction, **characterized by** comprising:
a target object presentation page presenting module configured to present a target object presentation page; and
a preview page presenting module configured to, in response to an instruction of returning an object preview page, present the object preview page, the object preview page and the target object presentation page corresponding to a same object, the object preview page comprising search keyword information, and the search keyword information being information determined based on object association information of the target object presentation page.

12. An electronic device, **characterized in that** the electronic device comprises:
one or more processors;
a storage device configured to store one or more programs; and
the one or more programs, when executed by the one or more processors, causing the one or more processors to implement the method of any of claims 1 to 10.

13. A computer-readable storage medium having a computer program stored thereon, **characterized in that** the computer program, when executed by a processor, implements the method of any of claims 1 to 10.
